Europäisches Patentamt

(19) European Patent Office

Office européen des brevets

(11) EP 0 821 043 A1

(12) EUROPEAN PATENT APPLICATION
published in accordance with Art. 158(3) EPC

(43) Date of publication:
28.01.1998 Bulletin 1998/05

(51) Int. Cl.⁶: **C09D 171/02**, B41M 5/00

(86) International application number:
PCT/JP97/00278

(21) Application number: 97902583.0

(22) Date of filing: 05.02.1997

(87) International publication number:
WO 97/29159 (14.08.1997 Gazette 1997/35)

(84) Designated Contracting States:
DE FR GB

(30) Priority: 09.02.1996 JP 24325/96
09.02.1996 JP 24326/96

(71) Applicant:
NIPPON SHOKUBAI CO., LTD.
Chuo-ku, Osaka-shi, Osaka-fu 541 (JP)

(72) Inventors:
• NAMBA, Takashi
Suita-shi, Osaka 564 (JP)
• YOSIDA, Kimihiko
Urawa-shi, Saitama 338 (JP)

(74) Representative:
Grünecker, Kinkeldey,
Stockmair & Schwanhäusser
Anwaltssozietät
Maximilianstrasse 58
80538 München (DE)

(54) TREATMENT FOR WATER-BASE INK RECEPTORS AND WATER-BASE INK RECEPTOR MADE BY USING THE SAME

(57) Use of a treating agent for water base ink receptor, which contains a polydioxolane, can produce a water base ink receptor equipped with a water base ink receiving layer which has high water base ink absorption rate, is resistant against water base ink smudge, and also against mixed color smudge even when color printing is conducted, and has excellent coloration property of the water base ink.

**Description**

TECHNICAL FIELD

The present invention relates to a treating agent for water base ink receptors and a water base ink receptor using the same.

BACKGROUND ART

In recent years, from the standpoints of environmental problems and maintenance of working environment, investigations of an ink to water base ink has extensively been made in various printing fields, and use of the water base ink has already started in respective fields.

Paper, namely a sheet-like ink receptor obtained by making wood fibers into paper (hereinafter referred to as "image receiving paper"), is generally used as materials to be printed (ink receptors), and not only plain paper but also recording paper having improved ink absorbency is used. For example, as described in JP-A-55-146786, recording papers or the like having an ink receiving layer for ink jet, printing comprising a water-soluble polymer such as a polyvinyl alcohol is known as an image receiving paper for ink jet printing with water base ink, having improved ink absorbency.

However, although the above-described conventional water base ink image receiving paper having improved ink absorbency has an excellent affinity for ink, there are problems that ink absorption rate is small, ink easily smudges, and when color printing is conducted, mixed color smudge is apt to occur or coloration of ink is poor.

In addition, these problems become further remarkable when a substrate other than paper, namely a plastic material, a metal, a ceramic material, glass or the like, is used as the ink receptor. Where a paper based material is used, water base ink is absorbed quickly in the ink receptor, so that excellent results of printing can be obtained relatively easily. However, where a non-paper based material is used, there are problems that wettability of water base ink is poor and its absorption rate is also slow, so that drying and fixing of the ink become slow, and also mixed color smudge occurs and coloration of ink is poor in color printing. For example, when color printing is made on an OHP sheet with an ink jet printer which uses a water base ink in order to prepare materials such as presentation in an office, the OHP sheet is a polyethylene terephthalate (a plastic), and does not absorb by oneself a water base ink but repels it, thereby causing problems that drying and fixing of the ink are slow, and particularly, in color printing, mixed color smudge occurs and coloration is poor. As a result, it is substantially impossible to print a non-paper based material with a water base ink.

In order to overcome such problems, JP-A-6-155895 and 6-336077 disclose a method in which a water-soluble polymer such as polyvinyl alcohol, polyvinyl pyrrolidone, or polyethylene oxide is used as a treating agent for ink receptor and coated on a non-paper based material such as an OHP sheet, and if necessary, after coating, a water base ink image receiving layer is crosslinked and insolubilized by post-treatment such as crosslinking with an isocyanate, or a high output electromagnetic wave such as ultraviolet rays, or electron rays.

However, the above treating agent for ink receptor has a problem that coloration of the ink is poor, although the affinity for the water base ink is excellent. Further, since hydrophilic property of the above treating agent for ink receptor is markedly high, even if crosslinking is conducted, the water base ink receiving layer formed on the surface of an OHP sheet is poor in water resistance, causing problems that the surface becomes sticky due to moisture absorption and the ink image receiving layer swells or dissolves even when a small amount of water is adhered for a short period of time.

The present invention is made to solve the above-described problems, and an object of the present invention is to provide a treating agent for water base ink receptors, which can give a water base ink receiving layer in which water base ink absorption rate is high, the water base ink is difficult to smudge, a mixed color smudge is difficult to occur even when color printing is conducted, and coloration property of the water base ink is excellent, and also a water base ink receptor obtained using the treating agent for water base ink receptor.

DISCLOSURE OF THE INVENTION

As a result of intensive studies, the present inventors have found that the above-described problems can be solved by containing a polydioxolane in a treating agent for water base ink receptor, and reached to complete the present invention.

Accordingly, the treating agent for water base ink receptor according to the present invention is characterized in that it contains a polydioxolane.

In order to achieve the object of the present invention more effectively, it is preferable that the above-described polydioxolane is a polymer having a structural unit represented by the following general formula (1):

$$-(-CH_2-O-CH_2CH_2-O-)_n- \hspace{4cm} (1)$$

(wherein n is an integer of 1 or more), and it is also preferable that the above-described polymer contains 60% by weight or more of the above-described structural unit.

Further, in order to achieve the object of the present invention more effectively, it is more preferable that the polydioxolane content of the treating agent is 10% by weight or more in terms of the solid content.

The treating agent for water base ink receptor of the present invention may contain the polydioxolane alone as a film forming resin, but it is preferable that the treating agent further contains an additional film forming resin other than the polydioxolane, because part of the amount of the film forming resin necessary for forming the water base ink receptor can be replaced with the film forming resin other than the polydioxolane, other physical properties that cannot be exhibited by the polydioxolane alone can be exhibited in the water base ink receiving layer by the other film forming resin, the effect of the polydioxolane is assisted by the other film forming resin, and synergistic effects with the polydioxolane can be exhibited.

It is preferable for the treating agent to be an aqueous substance in that it does not cause problems on the safety of working, maintenance of working environment, environmental pollution and the like. From those standpoints, the polydioxolane is water-soluble, and there is no problem. Therefore, it is preferable that the film forming resin other than the polydioxolane is a water-insoluble resin which can form an aqueous resin dispersion, and/or a water-soluble resin.

The treating agent for water base ink receptor of the present invention can be applied to either of paper based materials and non-paper based materials.

The treating agent of the present invention effectively acts even when applied to the paper based substrates. For example, the treating agent makes it possible to obtain an image receiving paper for jet printing with water base ink, having high ink absorption rate, ink smudge-difficult property, mixed color smudge-difficult property even when a color printing is conducted, and excellent ink coloration property, as compared with the conventional image receiving paper for jet printing with water base ink.

BEST MODE FOR PRACTICING THE INVENTION

Examples of the polydioxolane contained as an essential component in the treating agent for water base ink receptor of the present invention include a homopolymer of polydioxolane, a block or random copolymer obtained by copolymerizing 1,3-dioxolane with a monomer copolymerizable with 1,3-dioxolane, and a resin composition obtained by mixing the above-described homopolymer and/or copolymer with other polymer.

Particularly preferred is a polymer having a structural unit represented by the following general formula (1):

$$-(-CH_2-O-CH_2CH_2-O-)_n- \hspace{4cm} (1)$$

(wherein n is an integer of 1 or more), and it is preferable that the polymer contains 60% by weight or more of this structural unit, in points of high water base ink absorbency, less mixed color smudge and high coloration property.

Examples of the monomer which is copolymerizable with 1,3-dioxolane include unsaturated hydrocarbons such as styrene, (meth)acrylic acid, (meth)acrylic acid ester, ethylene, or propylene; cyclic ethers such as 2-methyl-1,3-dioxolane, 4-methyl-1,3-dioxolane, 4-ethyl-1,3-dioxolane, 1,3,6-trioxocane, 1,3-dioxepane, trioxane, ethylene oxide, propylene oxide, or tetrahydrofuran; and lactones or lactams such as γ-butyrolactone, glycolide, lactide, ε-caprolactone, or ε-caprolactam.

Examples of the other polymer to be used by mixing with the homopolymer and/or copolymer of dioxolane include poly(meth)acrylic acid, poly(meth)acrylic ester, polyvinyl alcohol, polystyrene, polyethylene glycol, polypropylene glycol, polytetramethylene oxide, polyethylene terephthalate, polylactic acid, polyglycolic acid, poly(3-hydroxybutyrate), poly(3-hydroxybutyrate-3-hydroxyvalerate), poly(ε-caprolactone), starch, chitin, chitosan, cellulose, carboxymethyl cellulose, and cellulose acetate.

Although not particularly limited, the polydioxolane content in the treating agent for water base ink receptor of the present invention is 10% by weight or more, preferably 30% by weight or more, and more preferably 50% by weight or more, in terms of the solid content, for the reasons of less mixed color smudge and high coloration property.

The treating agent for water base ink receptor of the present invention may contain the polydioxolane alone as the film forming resin, but where the treating agent further contains film forming resins other than the polydioxolane, the effects can be obtained such that water base ink smudge is small, and high water base ink printability can be obtained with small polydioxolane content.

The film forming resin other than the polydioxolane is not particularly limited so long as it forms a film. However, if the other film forming resin is a resin which is substantially insoluble in water and can form aqueous dispersion (water-insoluble resin) or a water-soluble resin, the treating agent for water base ink receptor can be made water-soluble. Therefore, such a resin is preferable in improvement of water base ink absorbency, and safety and maintenance of working environment in producing the water base ink receptor.

Specific examples of the film forming resin other than the polydioxolane include natural resins such as oxidized starch, cationated starch, pullulan, hydroxyethyl cellulose, or carboxymethyl cellulose; vinyl resins such as polyvinyl alcohol, polyvinyl pyrrolidone, polyvinyl formamide, polyvinyl acetamide, or styrene-butadiene rubber; acrylic resins such as poly(meth)acrylamide, or poly(meth)acrylic ester; polyether resins such as polyethylene oxide, polyethylene glycol, or polypropylene glycol; and condensation resins such as nylon, urethane, or polyester. Of those, starch and polyvinyl alcohol are preferred in the point of good absorbency of water base ink, and styrene-butadiene rubber, acrylic resins and urethane resins are preferred in the points of less ink smudge and high coloration property. Particularly preferred is a complex of an acrylic resin and an urethane resin, generally referred to as "acryl/urethane", which is obtained by mixing an acrylic resin with an urethane resin, by adding a polymerizable acrylic monomer to an urethane resin dispersion and polymerizing, or by reacting an isocyanate with a dispersion of an acrylic resin having in its molecule a functional group having reactivity with the isocyanate, in the points of less ink smudge and high coloration property, when compared with the case of an acrylic resin alone or a water-dispersible urethane alone.

Forms of the treating agent for water base ink receptor of the present invention are not particularly limited and may include a bulk, a solution, an aqueous dispersion (emulsion or latex), and the like. However, considering easiness of treating operation to a substrate, a solution or aqueous dispersion is preferable in the point that its handling in conducting treatment such as impregnation, coating, or spraying is easy as compared with the case of bulk. Further, when the treating agent is handled as a water-soluble treating agent such as an aqueous solution or an aqueous dispersion, it is preferable on safety of working and maintenance of working environment. Therefore, as the film forming resin other than polydioxolane and its form, at least one kind selected from a styrene-butadiene rubber latex, an urethane emulsion and an acrylic emulsion is preferable, and an aqueous dispersion of the above-described "acryl-urethane" is particularly preferable.

The substrate to which the treating agent for water base ink receptor of the present invention can be applied is not particularly limited, and it may be either a paper based material or a non-paper based material.

The "paper based material" used herein means a material comprising wood fibers such as pulp, and is generally obtained by subjecting a wood substrate to paper-making. Although not particularly limited, its examples include ultralight weight paper, light weight paper, wood-free paper, woody writing paper and the like.

Further, examples of the non-paper based substrate, namely a substrate made of a raw material other than wood fibers such as pulp, include those which are made of raw materials, e.g., polymers such as polyethylene terephthalate, polyethylene, polypropylene, polyvinyl chloride, polystyrene, polycarbonate, polymethyl methacrylate, ethylene-vinyl acetate copolymer, polyvinylidene chloride, acrylonitrile-butadiene-styrene copolymer (ABS resin), nylon, or polyurethane; metals such as iron, steel, stainless steel, gold, silver, copper, platinum, zinc, or brass; ceramics such as earthenware, or porcelain; and glass.

The form of the substrate is not particularly limited, and the substrate can be made into any shape, such as a film, a sheet, a plate, a block, or a molded article. In this connection, examples of the substrate in the form of a film or sheet include usual films having uniform and even surface, a so-called "synthetic paper", which is a film obtained by, for example, roughening the surface of a plastic film, non-woven fabrics, and woven fabrics.

A method using the treating agent for water base ink receptor of the present invention to a substrate (coating method) is not particularly limited, and examples thereof include a method in which the treating agent for water base ink receptor is adhered to a substrate under a molten state and then cooled and solidified; a method in which the treating agent for water base ink receptor is formed into fine particles and dropped on a substrate or adhered to the surface of the substrate utilizing static electricity, and then, if necessary, melted by heating, followed by cooling and solidifying; a method in which the treating agent for water base ink receptor in the form of a film or powder is adhered to a substrate on which an adhesive layer is provided in advance; and a method in which a coating solution is prepared by diluting the treating agent for water base ink receptor with an appropriate solvent, and a substrate is treated with the solution by coating, spraying or impregnation using a gate roll coater, an air knife coater, a spray or the like, drying the solution, and then, if necessary, further passing through other conventional steps. By such methods, a portion or the entire area of the surface of the substrate can be covered with the treating agent for water base ink receptor, and a water base ink receptor having the water base ink receiving layer of the present invention can be obtained. The water base ink receiving layer is not necessarily present independently from the substrate, and the case is included that the layer is integrated with the substrate by, for example, impregnating the substrate with the treating agent.

In addition, in order to assist and strengthen adhesion of the treating agent for water base ink receptor, an adhesive layer may be provided between the substrate surface and the water base ink receiving layer.

The solvent to be used in the above-described dilution is not particularly limited, but solvent having high volatility such as water, acetone, isopropyl alcohol, toluene, tetrahydrofuran, chloroform, or dioxane are preferable, and of those, water, isopropyl alcohol and toluene are particularly preferable because of their high safety. Concentration of the polydioxolane in such a case is also not particularly limited, but is generally from 0.1 to 30% by weight, and more preferably from 0.5 to 15% by weight. When the polydioxolane concentration is within the range of from 0.1 to 30% by weight, a suitable viscosity of the coating solution for a substrate can be obtained, and an ink receptor having excellent water base ink printability can also be obtained.

The treating agent for water base ink receptor of the present invention can be used by mixing it with various additives such as a stabilizing agent, a dispersing agent, an antifoam agent, a surface active agent, a pH adjusting agent, a filler, a pigment, a dyestuff and the like.

The amount of the treating agent for water base ink receptor used is generally from 0.01 $g/m^2$ to 200 $g/m^2$, and preferably from 0.1 $g/m^2$ to 50 $g/m^2$, based on the area of the substrate. When the amount is within the range of from 0.01 $g/m^2$ to 200 $g/m^2$, the effect of the present invention is exhibited effectively, so that sufficient water base ink printability is obtained without causing water base ink smudge and the like. In addition, an economical disadvantage does not occur that the ink receptor is treated with excess amount of the treating agent for water base ink receptor, and even when an ink receiving layer is provided, feeling of the substrate, and light transmission properties where a transparent substrate such as OHP sheet, or glass is used, can sufficiently be maintained.

Further, where obtaining an image receiving paper for water base ink, a method in which a coating solution is generally prepared by diluting the treating agent for water base ink receptor with an appropriate solvent, and the substrate is treated with the solution by coating, spraying or impregnation is preferable. In this case, the coating amount of the solid content contained in the coating solution (solid content coating amount) is preferably from 0.01 $g/m^2$ to 20 $g/m^2$, and more preferably from 0.1 $g/m^2$ to 10 $g/m^2$, per the area of the substrate. Within this range, sufficient ink jet printability can be obtained without causing water base ink smudge and the like and without damaging the excellent ink absorption rate characteristic inherent in the wood fibers.

The water base ink receptor thus obtained can be used in every printing means such as ink jet printing, flexo printing, gravure printing, offset printing, mimeograph printing and the like.

EXAMPLES

The present invention is specifically described below by the examples, but the invention is not limited thereto.

Example 1

(Synthesis of polydioxolane)

60.00 g of 1,3-dioxolane was added to a four-necked flask equipped with a stirrer, a condenser, a thermometer and a nitrogen-introducing pipe, and the four-necked flask was cooled with an ice bath of 0°C to adjust its inner temperature to 3°C. 0.3 ml of a methyl ethyl ketone solution containing 5% by weight of tungstophosphoric acid which had been dried at 120°C for 20 hours under a reduced pressure was added as a polymerization initiator to the four-necked flask while stirring. Polymerization started immediately after addition of the initiator and reached an exothermic peak of 45°C after about 6 minutes. By replacing the ice bath with a hot water bath of 50°C, the four-necked flask was kept at the same temperature to age the polymer for 15 minutes. The polymerization was stopped by adding 5 ml of 1,3-dioxolane solution containing 0.1 % by weight in concentration of triethylamine. Using a reduced-pressure dryer, the thus obtained polymer was dried at 110°C for 5 hours under a reduced pressure of 1 Torr to remove volatile components, thereby obtaining polydioxolane (1). When measured with a size exclusion chromatography, the polydioxolane (1) was found to have a polystyrene-converted number average molecular weight of 230,000.

(Preparation of coating solution)

The polydioxolane (1) was used as a receptor treating agent (1) and dissolved in methyl ethyl ketone so as to be a solid content of 10%, thereby preparing a coating solution (1).

(Coating on substrate)

The coating solution (1) was coated on an A4 size transparent polyethylene terephthalate film (Lumilar type T, thickness: 100 μm, manufactured by Toray) using a No. 28 wire rod, and then air-dried for a whole day and night in a constant temperature-constant humidity chamber controlled at 23°C and 65% humidity.

Central area of the dried film where the receptor treating agent (1) was uniformly adhered was cut roughly to B5 size to measure its weight, and the coating build-up of the receptor treating agent was calculated based on the following equation.

$$\text{Amount of receptor treating agent adhered } (g/m^2) = (W1 - W0 \times A)/A$$

W1:     Weight (g) of film cut after treatment
W0:     Weight per unit area ($g/m^2$) of untreated film
A:      Area ($m^2$) of film cut after treatment

The coating build-up of the receptor treating agent (1) was found to be 4.3 $g/m^2$.

(Performance evaluation)

Images of adjoining solids of yellow, cyan, magenta and black were printed using BJC-600J manufactured by Cannon K.K. as a full-color ink jet printer, and coloration property and boundary lines were evaluated based on the following indexes. Results of the evaluation are shown in Table 1.

Coloration property

Color hue and sharpness of the solid recording print images of yellow, cyan, magenta and black were visually evaluated.

o: Excellent coloration property and high density.
△: Slightly lacking in coloration property, and blurring of color is observed.
X: Lacking in coloration, and markedly decreased density is observed.

Boundary line

Boundary lines between solid print images of respective colors were visually judged using a magnifier to evaluate the degree of ink jet ink smudge.

o: No smudge, and boundary portions do not overlap and are separated.
△: Slight smudge, and boundary portions are overlapped.
X: Large smudge, and boundary portions are indefinite.

Example 2

(Preparation of coating solution)

A receptor treating agent (2) composed of 70 parts by weight of the polydioxolane (1) and 60 parts by weight of an acryl emulsion (trade name: Acryset EMN-210E, manufactured by Nippon Shokubai K.K., solid content 50%) was mixed with and dissolved in ion-exchanged water so as to be a total solid content of 10%, thereby preparing a coating solution (2).

(Coating on substrate)

The coating solution (2) was coated on a transparent polyethylene terephthalate film (Lumilar type T, thickness: 100 μm, manufactured by Toray) using a No. 28 wire rod, and then air-dried for a whole day and night in a constant temperature-constant humidity chamber controlled at 23°C and 65% humidity.
The coating build-up of the receptor treating agent (2) was found to be 7.6 $g/m^2$.

(Performance evaluation)

Coloration property and boundary lines were evaluated in the same manner as in Example 1. Results of the evaluation are shown in Table 1.

Example 3

(Preparation of coating solution)

A receptor treating agent (3) composed of 70 parts by weight of the polydioxolane (1) and 30 parts by weight of starch (trade name: Oji Ace C, manufactured by Oji Corn Starch) was dissolved in ion-exchanged water so as to be a total solid content of 5%, thereby preparing a coating solution (3).

(Coating on substrate)

The coating solution (3) was coated on a transparent polyethylene terephthalate film (Lumilar type T, thickness: 100 μm, manufactured by Toray) using a No. 60 wire rod, and then air-dried for a whole day and night in a constant temperature-constant humidity chamber controlled at 23°C and 65% humidity.

The coating build-up of the receptor treating agent (3) was found to be 6.2 g/m$^2$.

(Performance evaluation)

Coloration property and boundary lines were evaluated in the same manner as in Example 1. Results of the evaluation are shown in Table 1.

Example 4

(Preparation of coating solution)

A receptor treating agent (4) composed of 70 parts by weight of the polydioxolane (1) and 30 parts by weight of polyvinyl alcohol (trade name: Gosenol GL-50, manufactured by The Nippon Synthetic Chemical Industry) was mixed with and dissolved in ion-exchanged water so as to be a total solid content of 5%, thereby preparing a coating solution (4).

(Coating on substrate)

The coating solution (4) was coated on a transparent polyethylene terephthalate film (Lumilar type T, thickness: 100 μm, manufactured by Toray) using a No. 60 wire rod, and then air-dried for a whole day and night in a constant temperature-constant humidity chamber controlled at 23°C and 65% humidity.

The coating build-up of the receptor treating agent (4) was found to be 8.5 g/m$^2$.

(Performance evaluation)

Coloration property and boundary lines were evaluated in the same manner as in Example 1. Results of the evaluation are shown in Table 1.

Example 5

(Preparation of coating solution)

A receptor treating agent (5) composed of 70 parts by weight of the polydioxolane (1) and 64 parts by weight of an acryl emulsion (trade name: Johncryl 790, manufactured by Johnson Polymer, solid content 47%) was mixed with and dissolved in ion-exchanged water so as to be a total solid content of 5%, thereby preparing a coating solution (5).

(Coating on substrate)

The coating solution (5) was coated on a transparent polyethylene terephthalate film (Lumilar type T, thickness: 100 μm, manufactured by Toray) using a No. 60 wire rod, and then air-dried for a whole day and night in a constant temperature-constant humidity chamber controlled at 23°C and 65% humidity.

The coating build-up of the receptor treating agent (5) was found to be 8.7 g/m$^2$.

(Performance evaluation)

Coloration property and boundary lines were evaluated in the same manner as in Example 1. Results of the evaluation are shown in Table 1.

Example 6

(Preparation of coating solution)

A receptor treating agent (6) composed of 50 parts by weight of the polydioxolane (1) and 100 parts by weight of a styrene/butadiene rubber latex (trade name: Nipol LX407K, manufactured by Nippon Zeon, solid content 50%) was mixed with and dissolved in ion-exchanged water so as to be a total solid content of 5%, thereby preparing a coating solution (6).

(Coating on substrate)

The coating solution (6) was coated on a transparent polyethylene terephthalate film (Lumilar type T, thickness: 100 $\mu$m, manufactured by Toray) using a No. 60 wire rod, and then air-dried for a whole day and night in a constant temperature-constant humidity chamber controlled at 23°C and 65% humidity.

The coating build-up of the receptor treating agent (6) was found to be 8.2 g/m$^2$.

(Performance evaluation)

Coloration property and boundary lines were evaluated in the same manner as in Example 1. Results of the evaluation are shown in Table 1.

Example 7

(Preparation of coating solution)

A receptor treating agent (7) composed of 70 parts by weight of the polydioxolane (1) and 100 parts by weight of a urethane emulsion (trade name: NeoRez R-960, manufactured by Geneka, solid content 33%) was mixed with and dissolved in ion-exchanged water so as to be a total solid content of 5%, thereby preparing a coating solution (7).

(Coating on substrate)

The coating solution (7) was coated on a transparent polyethylene terephthalate film (Lumilar type T, thickness: 100 $\mu$m, manufactured by Toray) using a No. 60 wire rod, and then air-dried for a whole day and night in a constant temperature-constant humidity chamber controlled at 23°C and 65% humidity.

The coating build-up of the receptor treating agent (7) was found to be 7.5 g/m$^2$.

(Performance evaluation)

Coloration property and boundary lines were evaluated in the same manner as in Example 1. Results of the evaluation are shown in Table 1.

Comparative Example 1

Using an untreated transparent polyethylene terephthalate film, coloration property and boundary lines were evaluated in the same manner as in Example 1. Results of the evaluation are shown in Table 1.

Comparative Example 2

(Preparation of coating solution)

As a comparative receptor treating agent, polyvinyl alcohol (trade name: Gosenol GL-50, manufactured by The Nippon Synthetic Chemical Industry) was mixed with and dissolved in ion-exchanged water so as to be a total solid content of 5%, thereby preparing a comparative coating solution (1).

(Coating on substrate)

The comparative coating solution (1) was coated on a transparent polyethylene terephthalate film (Lumilar type T, thickness: 100 $\mu$m, manufactured by Toray) using a No. 60 wire rod, and then air-dried for a whole day and night in a constant-temperature constant humidity chamber controlled at 23°C and 65% humidity.

The coating build-up of the comparative receptor treating agent (1) was found to be 7.2 g/m$^2$.

(Performance evaluation)

Coloration property and boundary lines were evaluated in the same manner as in Example 1. Results of the evaluation are shown in Table 1.

Table 1

|  | Coloration property | Boundary lines |
|---|---|---|
| Example 1 | o | △ |
| Example 2 | o | o |
| Example 3 | o | o |
| Example 4 | o | o |
| Example 5 | o | o |
| Example 6 | o | o |
| Example 7 | o | o |
| Comparative Example 1 | X | X |
| Comparative Example 2 | X | X |

Example 8

(Preparation of coating solution)

The polydioxolane (1) was diluted with ion-exchanged water so as to be a solid content of 5%, thereby preparing a coating solution (8).

(Coating on substrate)

Using a No. 5 wire rod, 7.5 g of the coating solution (8) was coated (coating build-up was 6 g/m$^2$, based on an assumption that the coating solution was coated uniformly on neutral PPC paper) on a sheet of A4 size neutral PPC paper which has been subjected to 48 hours of humidity conditioning in a constant temperature-constant humidity chamber controlled at 23°C and 65% humidity, and the thus coated solution was then air-dried for a whole day and night in a constant temperature-constant humidity chamber, thereby obtaining an image receiving paper for jet printing with water base ink, treated with the coating agent.

(Performance evaluation)

Coloration property and boundary lines were evaluated by conducting printing in the same manner as in Example 1, and another performance evaluation was made in terms of absorption property and strike through based on the following criteria. Results of the evaluation are shown in Table 2.

Absorption property

Immediately after printing a solid recording print image, the recorded portion was touched with a finger to visually evaluate whether or not the ink was adhered to the finger.

o: Ink does not adhere when touched with a finger immediately after printing.
△: Ink adheres when touched with a finger immediately after printing but does not adhere when touched with a finger after 5 seconds.
X: Ink adheres when touched with a finger even after 5 seconds of the printing.

Strike through

Back side of the solid recording print images of yellow, cyan, magenta and black was visually evaluated.

o: Strike through of ink is hardly found.

△: Strike through of ink is slightly found.

X: Strike through of ink is significantly found.

Example 9

An image receiving paper for jet printing with water base ink was obtained in the same manner as in Example 8, except that a coating solution (9) prepared in the following manner was used in stead of the coating solution (8) of Example 8, and its coloration property, boundary lines, absorption property and strike through were evaluated. Results of the evaluation are shown in Table 2.

(Preparation of coating solution)

A mixture composed of 70 parts by weight of the polydioxolane (1) and 60 parts by weight of an acryl emulsion (trade name: Acryset EMN-210E, manufactured by Nippon Shokubai K.K., solid content 50%) was diluted with ion-exchanged water so as to be a solid content of 5%, thereby preparing a coating solution (9).

Example 10

An image receiving paper for jet printing with water base ink was obtained in the same manner as in Example 8, except that the coating solution (3) prepared in Example 3 was used in stead of the coating solution (8) of Example 8, and its coloration property, boundary lines, absorption property and strike through were evaluated. Results of the evaluation are shown in Table 2.

Example 11

An image receiving paper for jet printing with water base ink was obtained in the same manner as in Example 8, except that the coating solution (4) prepared in Example 4 was used in stead of the coating solution (8) of Example 8, and its coloration property, boundary lines, absorption property and strike through were evaluated. Results of the evaluation are shown in Table 2.

Example 12

An image receiving paper for jet printing with water base ink was obtained in the same manner as in Example 8, except that the coating solution (5) prepared in Example 5 was used in stead of the coating solution (8) of Example 8, and its coloration property, boundary lines, absorption property and strike through were evaluated. Results of the evaluation are shown in Table 2.

Example 13

An image receiving paper for jet printing with water base ink was obtained in the same manner as in Example 8, except that the coating solution (6) prepared in Example 6 was used in stead of the coating solution (8) of Example 8, and its coloration property, boundary lines, absorption property and strike through were evaluated. Results of the evaluation are shown in Table 2.

Example 14

An image receiving paper for jet printing with water base ink was obtained in the same manner as in Example 8, except that the coating solution (7) prepared in Example 7 was used in stead of the coating solution (8) of Example 8, and its coloration property, boundary lines, absorption property and strike through were evaluated. Results of the evaluation are shown in Table 2.

Comparative Example 3

Coloration property, boundary lines, absorption property and strike through of untreated neutral PPC paper were evaluated in the same manner as in Example 8. Results of the evaluation are shown in Table 2.

Comparative Example 4

Starch (trade name: Oji Ace C, manufactured by Oji Corn Starch) was diluted with ion-exchanged water so as to be a solid content of 5%, thereby obtaining a comparative coating solution (2). Thereafter, a comparative image receiving paper for water base ink jet was obtained in the same manner as in Example 8, and its coloration property, boundary lines, absorption property and strike through were evaluated. Results of the evaluation are shown in Table 2.

Comparative Example 5

Using the comparative coating solution (1) prepared in Comparative Example 2, a comparative image receiving paper for water base ink jet was obtained in the same manner as in Example 8, and its coloration property, boundary lines, absorption property and strike through were evaluated. Results of the evaluation are shown in Table 2.

Table 2

|  | Coloration property | Boundary line | Absorption property | Strike through |
|---|---|---|---|---|
| Example 8 | o | o | o | o |
| Example 9 | o | o | o | o |
| Example 10 | o | o | o | o |
| Example 11 | o | o | o | o |
| Example 12 | o | o | o | o |
| Example 13 | o | o | o | o |
| Example 14 | o | o | o | o |
| Comparative Example 3 | △ | X | o | X |
| Comparative Example 4 | △ | X | △ | △ |
| Comparative Example 5 | △ | X | △ | △ |

INDUSTRIAL APPLICABILITY

According to the treating agent for water base ink receptor of the present invention, a water base ink receptor can be produced which is equipped with a water base ink receiving layer that has high water base ink absorption rate, is resistant against water base ink smudge, and also resistant even against mixed color smudge when color printing is conducted, and has excellent coloration property of water base ink.

**Claims**

1. A treating agent for water base ink receptor, characterized in that it contains a polydioxolane.

2. The treating agent for water base ink receptor as claimed in claim 1, wherein said polydioxolane is a polymer having a structural unit represented by the following general formula (1):

$$-(-CH_2-O-CH_2CH_2-O-)_n- \qquad (1)$$

(wherein n is an integer of 1 or more), and said polymer contains 60% by weight or more of said structural unit.

3. The treating agent for water base ink receptor as claimed in claim 1 or 2, wherein the polydioxolane content is 10% by weight or more in terms of a solid content.

4. The treating agent for water base ink receptor as claimed in any of claims 1 to 3, which further contains a film forming resin other than the polydioxolane.

5. The treating agent for water base ink receptor as claimed in claim 4, wherein the film forming resin other than polydioxolan is a water-insoluble resin which can form an aqueous resin dispersion and/or a water-soluble resin.

6.  The treating agent for water base ink receptor as claimed in claim 5, wherein the water-soluble resin is starch and/or polyvinyl alcohol.

7.  The treating agent for water base ink receptor as claimed in claim 5, wherein the aqueous resin dispersion is at least one kind selected from a styrene/butadiene rubber latex, an urethane emulsion and/or an acrylic emulsion.

8.  A water base ink receptor having a water base ink receiving layer which comprises a substrate and a polydioxolane contained therein.

9.  A water base ink receptor comprising a substrate having formed thereon a water base ink receiving layer which is obtained by using the treating agent for water base ink receptor as claimed in any of claims 1 to 7.

10. A receptor for jet printing with water base ink, which has an ink receiving layer for jet printing with water base ink on a paper based material, wherein said layer contains a polydioxolane.

11. A water base ink receptor for jet printing with water base ink, which has a water base ink receiving layer obtained using the treating agent for water base ink receptor as claimed in any of claims 1 to 7, on a paper based material.

EP 0 821 043 A1

## INTERNATIONAL SEARCH REPORT

| | International application No. |
|---|---|
| | PCT/JP97/00278 |

**A. CLASSIFICATION OF SUBJECT MATTER**
Int. Cl$^6$ C09D171/02, B41M5/00

According to International Patent Classification (IPC) or to both national classification and IPC

**B. FIELDS SEARCHED**

Minimum documentation searched (classification system followed by classification symbols)
Int. Cl$^6$ C09D171/00-14, B41M5/00-40

Documentation searched other than minimum documentation to the extent that such documents are included in the fields searched
Jitsuyo Shinan Koho      1926 - 1997
Kokai Jitsuyo Shinan Koho    1971 - 1997

Electronic data base consulted during the international search (name of data base and, where practicable, search terms used)
WPI, WPIL (dioxolane, ink jet, aq?, polyether, poly?)

**C. DOCUMENTS CONSIDERED TO BE RELEVANT**

| Category* | Citation of document, with indication, where appropriate, of the relevant passages | Relevant to claim No. |
|---|---|---|
| P,X<br>P,Y | JP, 8-337046, A (New Oji Paper Co., Ltd.),<br>December 24, 1996 (24. 12. 96),<br>Column 2, lines 15 to 44; column 3, lines 11 to<br>25 (Family: none) | 1, 3-11<br>2 |
| A | JP, 5-79037, B2 (Xerox Corp.),<br>November 1, 1993 (01. 11. 93),<br>Claim; column 5, line 23 to column 7, line 28<br>& US, 4592954, A | 1-6, 8-11 |
| A | JP, 2-1359, A (Fuji Photo Film Co., Ltd.),<br>January 5, 1990 (05. 01. 90),<br>Claim; page 2, lower right column, lines 2 to 10;<br>page 3, lower left column, line 15 to page 4,<br>upper left column, line 15 & US, 4946741, A | 1, 3-11 |
| A | US, 4528242, A (Transcopy, Inc.),<br>July 9, 1985 (09. 07. 85),<br>Column 1, lines 33 to 51; column 3, line 9 to<br>column 4, line 63 (Family: none) | 1 - 11 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| May 6, 1997 (06. 05. 97) | May 13, 1997 (13. 05. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)

13